# EUROPEAN PATENT APPLICATION

(11) **EP 3 001 693 A1**
(43) Date of publication of application: **30.03.2016**
(21) Application number: 14306500.1
(22) Date of filing: 26.09.2014
(51) Int. Cl.: H04N 21/845, H04N 21/239, H04N 21/2343, H04N 21/63, H04N 21/442

(54) **Server, client, method and computer program product for adaptive streaming of scalable video and/or audio to a client**

(71) Applicant: ALCATEL LUCENT, 92100 Boulogne-Billancourt (FR)
(72) Inventor: Van Broeck, Sigurd, 2018 Antwerpen (BE); De Vleeschauwer, Bart, 2018 Antwerpen (BE); Verzijp, Nico, 2018 Antwerpen (BE); Huysegems, Rafaël, 2018 Antwerpen (BE)
(74) Representative: Lubberdink, Pim

(57) **Abstract**

Embodiments of the invention relate to a server, client, method and computer program product for adaptive streaming of scalable video and/or audio to a client. The scalable video and/or audio is divided into consecutive segments, each segment being encoded as a base layer and at least one enhancement layer. The server comprises:
- a receiver configured to receive a request from the client for a first layer of a selected segment, the first layer being one of the base layer and the at least one enhancement layer; and
- a transmitter configured to, in response to the request:
o send the requested first layer of the selected segment to the client; and
o push at least one second layer of the selected segment to the client, the second layer being a different one of the base layer and the at least one enhancement layer.

## Description

### Field of invention

The field of the invention relates to adaptive streaming of scalable video and/or audio to a client. In particular, the invention relates to a server for adaptive streaming of scalable video and/or audio to a client, a method for adaptive streaming of scalable video and/or audio from a server to a client and a corresponding computer program product, a client for receiving an adaptive stream of scalable video and/or audio from a server and a method for receiving an adaptive stream of scalable video and/or audio from a server by a client and corresponding computer program product.

### Background

In recent years, the demand for streaming media content, such as video and/or audio content, has rapidly increased. In particular the number of over the top (OTT) video delivery applications, such as YouTube and NetFlix, has increased. Over the top content delivery refers to delivery of content over the public internet.

In particular, HTTP adaptive streaming (HAS) is rapidly becoming the most popular method for streaming media content. One of the major advantages of HAS is its ability to adapt the video quality to the bandwidth (BW) conditions in the network, in order to avoid video rebuffering, resulting in a freeze of the playout.

Technologies for adaptive streaming over HTTP include Smooth Streaming (Microsoft), HTTP Live Streaming (Apple) and Dynamic Adaptive Streaming over HTTP (MPEG-DASH). In the context of the invention the term HAS will be used to refer to all such adaptive streaming over HTTP technologies. Furthermore, the term HAS will also be used for streaming over the SPDY protocol, which is a protocol related to the HTTP protocol.

When combining HAS with scalable video and/or audio, such as Scalable Video Coding (SVC) or Scalable High Efficiency Video Coding (Scalable HEVC or SHVC), the video and/or audio segments of the stream are encoded as a plurality of layers: a base layer and one or more enhancement layers. The base layer provides the video / audio segment at a lowest quality. The quality can be enhanced by combining the base layer with one or more enhancement layers. When sufficient bandwidth is available, the client can request all layers of a given segment, which are combined to reconstruct the segment at the highest quality. If the bandwidth is too low, retrieving all layers of each segment could lead to buffer underrun which can cause freezing of the stream. Therefore, if the bandwidth drops below a certain threshold the client can omit one or more of the enhancement layers, by not requesting said layer(s).

However, the average bandwidth utilization during streaming of scalable video and/or audio is relatively low.

### Summary

An object of embodiments of the invention is to improve the bandwidth utilization for streaming of scalable video and/or audio.

According to an embodiment of the present invention, there is provided a server for adaptive streaming of scalable video and/or audio to the client. The scalable video and/or audio is divided into consecutive segments. Each segment is encoded as a base layer and at least one enhancement layer. The server comprises a receiver and a transmitter. The receiver is configured to receive a request from the client for a first layer of a selected segment. Said first layer is one of the base layer and the at least one enhancement layer of the selected segment. The transmitter is configured to send the requested first layer of the selected segment to the client in response to the request. The transmitter is further configured to push at least one second layer of the selected segment to the client in response to the request. The second layer is a different one of the base layer and the at least one enhancement layer, i.e. the first layer and second layer are different.

Pushing a second layer in addition to the requested layer has the advantage an additional client request for the second layer and a server response to said additional request can be avoided. Therefore, an additional Round Trip Time (RTT) can be avoided. In other words, the number of RTTs of communication between the client and the server is reduced. During a RTT the available bandwidth capacity remains unused. Therefore, by reducing the number of RTTs, the average bandwidth utilization is increased. Furthermore, due to the increased bandwidth utilization, higher quality levels of the video and/or audio can be reached. A further advantage is that for live streams, the camera-to-display delay is reduced due to the reduction of the number of RTTs.

Pushing a layer preferably comprises sending a push announcement message to the client for announcing the layer that is about to be pushed, followed by pushing said layer. The announcement message enables the client to omit a request for the layer that is about to be pushed and/or to decline the pushing by the server by sending a push decline message to the server. When using the HTTP 2.0 protocol (or later) the push announcement message may be implemented by sending a PUSH_PROMISE frame before pushing the layer. The push decline message may be implemented using the RST_STREAM frame.

The video and/or audio is divided into consecutive segments, also called chunks. For example, the size of the segments may be 0.5 - 10 seconds, and is typically 2-6 seconds, although other durations are also within the scope of the invention.

In conventional HAS, each video segment has a duration of at least 2 seconds: typically 2 seconds for Microsoft's Smooth Streaming and 6 seconds for Apple's Live Streaming. This duration of the video segments is chosen on the basis of several parameters, such as HTTP overhead and encoding/compression overhead. In particular this duration is chosen on the basis of average RTT. If the duration of the segments is chosen too small, the overhead of RTT, HTTP and encoding/compression will be too large compared to the segment duration. If the duration is chosen too big, the adaptability of the HAS to the bandwidth becomes too small. However, since the invention reduces the number of RTTs as well of the number of HTTP requests, the overhead becomes smaller. Therefore, the invention enables the use of relatively small video segments, e.g. less than 1 second, increasing the adaptability of the HAS to the bandwidth, while the ratio between overhead and segment size remains comparable to said ratio for conventional HAS.

In an embodiment, the first layer is one of the at least one enhancement layers, and the transmitter is configured to push all layers of the selected segment having a lower quality level than the requested first layer.

In other words, in this embodiment the server receives a request for one of the enhancement layers of a selected segment from the client. In response, the server will send the requested enhancement layer of the selected segment. In addition the server will push all layers of the segment below the requested enhancement layer. Therefore, in effect the server will respond to the client's request by returning all layers up to the requested layer, i.e. up to the quality level requested by the client.

Therefore, the client may only send a single request to obtain all desired layers of a given segment, corresponding to a request for the highest quality layer only, instead of sending multiple requests, i.e. one request for each layer.

For example, video segments are encoded as a base layer (BL), a first enhancement layer (EL1) and a second enhancement layer (EL2). If the server receives a request for EL2 of segment *n*, it will send EL2 of segment *n*, push EL1 of segment *n* and push BL of segment *n* in response to said request. If the server receives a request for EL1 of segment *n*, it will send EL1 of segment *n* and push BL of segment *n* in response to the request.

Preferably, the transmitter is configured to push the one or more layers in order of increasing quality. For example, if the client requests EL2 of a segment, the transmitter will first push BL, then push EL1 and then push EL2.

It is further noted that when the server is configured to respond to a request for an enhancement layer by pushing lower quality layers, the server may be further configured not to push any additional layers when only a request for a base layer of a segment is received.

In an embodiment, the receiver is configured to receive a request from the client for a base layer of a selected segment, said request including an indication of at least one enhancement layer of the selected segment, wherein the transmitter is configured to, in response to the request, send the requested base layer of the selected segment to the client and push the at least one enhancement layer indicated in the request.

For example, the server may receive a request for the base layer of segment n, wherein an indication of the first enhancement layer and the second enhancement layer has been included. In response to said request, the server sends the base layer of segment n to the client and pushes the first enhancement layer and the second enhancement layer of segment n.

In a further embodiment, the transmitter is configured to, in response to said request for a base layer of the selected segment which indicates at least one enhancement layer, send the requested base layer of the selected segment to the client and push all enhancement layers of the selected segment up to and including the highest quality layer of the at least one enhancement layer indicated in the request.

In other words, the request for the highest desired quality layer has been included by the client in a request for the base layer. In response, the server sends the base layer to the client and pushes all layers up to the highest desired quality as indicated in the request. This has the advantage that the client may only include an indication for a single enhancement layer to obtain all desired enhancement layers. For example, the client sends a request for the base layer of segment n, including an indication for the second enhancement layer. In response, the server sends the base layer of segment n and pushes the first enhancement layer and the second enhancement layer of segment n.

In an embodiment, the transmitter is configured to send a push announcement message to the client for each layer of the at least one second layer before pushing the respective layer. The receiver is further suitable for receiving a push decline message from the client, and the transmitter is further configured to cancel the pushing of a layer if a push decline message for said layer is received by the receiver.

In other words, when the transmitter pushes a layer, it will first send a push announcement message for said layer to the client. The push announcement message indicates the layer to be pushed. After the server sends the push announcement message, it may start pushing the layer to the client. The client may however decline the layer announced by the push announcement message. If the server receives a push decline message from the client, it will cancel the pushing of the layer. In other words, the server will abort transfer of the layer to the client.

The push announcement message may for example be implemented using a PUSH_PROMISE frame as defined in HTTP 2.0 or SPDY. The push decline message may for example be implemented using a RST_STREAM frame as defined in HTTP 2.0 or SPDY.

In a further embodiment, the transmitter is configured to, in response to a push decline message from the client for a layer of the selected segment having a first quality, cancel the pushing of all layers of the selected segment having a quality equal to or greater than the first quality.

An advantage of this embodiment that for a selected segment the client only has to send a single push decline message to the server in order to cancel the pushing of any layers having a quality equal to or greater than the quality indicated in the push decline message. For example, the server intends to push layers EL1, EL2, EL3 and EL4 of segment *n* in addition to sending the base layer BL. For each layer to be pushed, the server sends a push announcement message to the client prior to pushing the layer. If the client only wants to receive the layers up to EL2, it sends a push decline message for EL3. The server receives the push decline message for EL3 and cancels the pushing of EL3 and EL4.

In an embodiment, the transmitter is configured to, in response to the request for the first layer, push all other layers of the base layer and the at least one enhancement layer.

In other words, in this embodiment the server returns all layers in response to a request for a layer by the client. For example, in response to a request for a base layer, the server may in addition to sending the base layer push all available enhancement layers to the client. However, the client may cancel any of the pushed layers by sending one or more push decline messages to the server.

In an embodiment, the server comprises a tracker configured to track the highest quality level of the one or more layers transferred to the client. In this embodiment, the first layer is the base layer and the transmitter is configured to push to the client any further layers of the selected segment up to and including the layer corresponding to the highest quality level of a segment preceding the selected segment in response to the request for the base layer of the selected segment.

In other words, in this embodiment the server tracks the quality of the layers transferred to the client. When the server receives a request for a base layer of a selected segment, the server will respond by sending the requested base layer and pushing any further layers, i.e. zero or more enhancement layers, up to the tracked highest quality level.

Preferably, the transmitter is configured to push any further layers in order of increasing quality. For example, if the tracked highest quality level is EL2 and the client requests the BL of a next segment, the transmitter will push EL1 before pushing EL2.

In an embodiment wherein the server is configured to cancel the pushing of layers if a push decline message is received, the layers transferred to the client include the layers sent to the client in response to a request and the pushed layers for which no push decline message has been received by the server.

For example, video segments are encoded as a base layer (BL), a first enhancement layer (EL1) and a second enhancement layer (EL2). For segment *n*, the server has sent BL and in addition pushed EL1 and EL2 to the client. No push decline messages were received for EL1 or EL2. Therefore, the server registers EL2 as highest quality. Subsequently, the server may receive a request for BL of segment *n* + *1*. In response to said request, the server sends BL of segment *n*+*1* and pushes all layers up to and including the tracked highest quality for segment *n*, i.e. EL2. Therefore, the server will push EL1 of segment *n*+*1* and EL2 of segment *n*+*1*. The client may send a push decline message e.g. for EL2 of segment *n*+*1*. The server will in response to said push decline message cancel the pushing of EL2 of segment *n*+*1.* Furthermore, the server will update the tracked highest quality level to EL1, as EL1 is now the highest quality level for which no decline message has been received by the server.

In another example, the server may track the highest quality on the basis of the requests received from the client. For example, the server has received requests for BL, EL1 and EL2 from the client. Therefore, the highest quality layer requested by the client for segment n is EL2. Subsequently, the server may receive a request for BL of segment *n* + *1*. In response to said request, the server sends BL of segment *n*+*1* and pushes all layers up to and including the highest quality level previously requested for segment *n*. In this case, EL2 was the highest quality layer previously requested for segment *n*. Therefore, the server will push EL1 of segment *n*+*1* and EL2 of segment *n*+*1.*

It is noted that the segment preceding the selected segment may be the segment directly preceding the selected segment, i.e. the previous segment, or an even earlier segment. For example, the server may use the highest quality requested by / transferred to the client for a first segment for pushing enhancement layers of two or more subsequent segments.

In an alternative embodiment, the server may be configured to determine a highest quality level on the basis of the speed at which the base layers are requested, wherein the first layer is the base layer and the transmitter is configured to push to the client any further layers of the selected segment up to and including the layer corresponding to the highest quality level. Preferably, the further layers are pushed in order of increasing quality.

In an embodiment, the server is configured to switch between an initialization mode and a pushing mode. In the initialization mode, the transmitter is configured to only send a requested layer to the client in response to a request for said layer. In the initialization mode, the tracker is configured to track the highest quality level of the layers transferred to the client. In the pushing mode, the transmitter is configured to - in response to a request for the base layer of the selected segment - push to the client any further layers up to and including the layer corresponding to the tracked highest quality level.

For example, the server may be configured to start in initialization mode. The server may further be configured to switch to pushing mode after a first predetermined number of segments have been handled in initialization mode, preferably at least one. The server may further be configured to switch from pushing mode to initialization mode after a second predetermined number of segments have been handled in pushing mode, e.g. 4-50. The first predetermined number and/or the second predetermined number may for example be fixed, configurable and/or negotiated between the client and the server. In another example, the server decreases the tracked highest quality level to the base layer level after a predetermined number of segments. The predetermined number may again be fixed, configurable and/or negotiated.

In an embodiment the server is configured to communicate with the client according to a web protocol supporting server push.

An advantage of using a web protocol is that use can be made of the existing infrastructure of the internet. Furthermore, the data can be transported through firewalls without problems.

In an embodiment, the protocol is an HTTP protocol or a SPDY protocol, preferably HTTP 2.0 or later.

An advantage of using the HTTP or SPDY protocol is that use can be made of the existing HTTP infrastructure of the internet. For example, HTTP-servers, HTTP-proxies and Content Delivery Networks (CDNs) can be reused to deliver HAS content. Furthermore, the data can be transported through firewalls without problems.

In the context of the invention, the term HTTP also encompasses HTTPS, as technically HTTPS is HTTP on top of the SSL/TLS protocol.

Preferably, the server is configured for HTTP adaptive streaming of scalable video and/or audio to the client using a HTTP based protocol supporting server push, such as HTTP 2.0 or later, or the SPDY protocol.

In an embodiment, the server may be configured to establish a persistent connection between the server and the client. For example, the connection may be a TCP connection.

Further embodiments of the invention relate to a method for adaptive streaming of scalable video and/or audio from a server to a client.

In an embodiment, the scalable video and/or audio is divided into consecutive segments. Each segment is encoded as a base layer and at least one enhancement layer. In this embodiment, the method comprises the step of receiving with the server a request from the client for a first layer of a selected segment. The first layer is one of the base layer and the at least one enhancement layer. The method further comprises the step of sending the requested first layer of the selected segment from the server to the client in response to the request. The method further comprises the step of pushing at least one second layer of the selected segment from the server to the client in response to the request for the first layer of the selected segment. The second layer is a different one of the base layer and the at least one enhancement layer, i.e. the first layer and second layer are different layers of the segment.

In an embodiment, the first layer is one of the at least one enhancement layers and pushing the at least one second layer comprises pushing all layers of the selected segment having a lower quality level than the requested first layer.

In an embodiment, the method comprises receiving a request from the client for a base layer of a selected segment, wherein said request includes an indication of at least one enhancement layer of the selected segment. The method further comprises sending the requested base layer of the selected segment to the client and pushing the at least one enhancement layer indicated in the request, in response to said request.

In a further embodiment, the method comprises receiving a request from the client for a base layer of a selected segment, wherein said request includes an indication of at least one enhancement layer of the selected segment. The method further comprises sending the request base layer of the selected segment to the client and pushing all enhancement layers of the selected segment up to and including the highest quality layer of the at least one enhancement layer indicated in the request.

In an embodiment, the method comprises sending a push announcement message to the client for each layer of the at least one second layer before pushing the respective layer. The method further comprises cancelling the pushing of a layer if a push decline message for said layer is received.

In an embodiment, the method comprises receiving a push decline message from the client for a layer of the selected segment having a first quality. The method further comprises cancelling the pushing of all layers of the selected segment having a quality equal to or greater than a first quality in response to said push decline message.

In an embodiment, the method comprises, in response to the request for the first layer, pushing all other layers of the base layer and the at least one enhancement layer.

In an embodiment, the method comprises tracking the highest quality level of the one or more layers transferred to the client, wherein the first layer is the base layer, and the method further comprises pushing to the client any further layers of the selected segment up to and including the layer corresponding to the highest quality level of a segment preceding the selected segment in response to the request for the base layer of the selected segment.

In an embodiment, the method comprises switching between
- an initialization mode, wherein, in response to a request for a layer of a segment, only said requested layer is sent to the client and the highest quality level of the layers transferred to the client is tracked; and
- a pushing mode, wherein any further layers up to and including the layer corresponding to the tracked highest quality level is pushed to the client in response to a request for the base layer of the selected segment.

In an embodiment, the method comprises communicating with the client according to a web protocol supporting server push.

In a further embodiment, the protocol is an HTTP protocol or SPDY protocol, preferably HTTP 2.0 or later.

Further embodiments of the invention relate to a client for receiving an adaptive stream of scalable video and/or audio from a server.

In an embodiment, the scalable video and/or audio is divided into consecutive segments. Each segment is encoded as a base layer and at least one enhancement layer. The client comprises a rate determination component, a transmitter and a receiver. The rate determination component is configured to determine the highest quality level layer to be obtained for a selected segment. The transmitter is configured to send a request to the server for the layer of the selected segment corresponding to the determined highest quality level layer. The receiver is configured to receive from the server all layers of the selected segment up to and including the determined highest quality level layer in response to the request.

The rate determination component may for example determine the desired quality, i.e. the desired bitrate, on the basis of the available bandwidth, CPU capacity and/or buffer level.

For example, the rate determination component determines that the highest quality level to be obtained for segment *n* corresponds to EL2. Therefore, the transmitter sends a request for EL2 of segment *n* to the server. The receiver then receives from the server BL of segment *n*, EL1 of segment *n* and EL2 of segment *n*. The server may be a server according to an embodiment of the present invention as described above.

The client may send a request for the layer corresponding to the highest quality only, i.e. requests for lower quality level layers are omitted. Alternatively, the client may send a request for the base layer with an indication of at least one enhancement layer. For example, the client may send a request for the base layer with an indication of the highest desired enhancement layer.

Further embodiment of the invention relate to a method for receiving an adaptive stream of scalable video and/or audio from a server by a client.

In an embodiment, the scalable video and/or audio is divided into consecutive segments, each segment being encoded as a base layer and at least one enhancement layer. The method comprises determining the highest quality level layer to be obtained for a selected segment. The method further comprises sending a request from the client to the server for the layer of the selected segment corresponding to the determined highest quality level layer. The method further comprises receiving with the client from the server all layers of the selected segment up to and including the determined highest quality level layer in response to the request.

Further embodiments of the invention relate to a client for receiving an adaptive stream of scalable video and/or audio from a server.

In an embodiment, the scalable video and/or audio is divided into consecutive segments. Each segment is encoded as a base layer and at least one enhancement layer. The client comprises a rate determination component, a transmitter and a receiver. The rate determination component is configured to determine the highest quality level layer to be obtained for a selected segment. The transmitter is configured to send a request to the server for a layer of the selected segment. The receiver is configured to receive from the server layers of the selected segment in response to the request. The receiver is further configured for receiving push announcement messages from the server, wherein a push announcement message indicates a layer of the selected segment to be pushed from the server to the client. The transmitter is further configured to send a push decline message to the server in response to a push announcement message for a layer if said layer has a quality level exceeding the highest quality level determined by the rate determination component.

Further embodiment of the invention relate to a method for receiving with a client an adaptive stream of scalable video and/or audio from a server.

In an embodiment, the scalable video and/or audio is divided into consecutive segments, each segment being encoded as a base layer and at least one enhancement layer. The method comprises:
- determining the highest quality level layer to be obtained for a selected segment;
- sending a request to the server for a layer of the selected segment;
- receiving from the server layers of the selected segment in response to the request; and
- upon receipt of a push announcement message indicating a layer of the selected segment to be pushed from the server to the client, sending a push decline message to the server if said layer has a quality level exceeding the highest quality level determined by the rate determination component.

Further embodiments of the invention relate to a computer program product comprising non-transitory computer-executable instructions configured to, when executed, perform the steps of any of the methods described above.

The same effects and advantages as described above with respect to the server apply to the client, methods and the computer program product.

### Brief description of the figures

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings, in which:
Figure 1 schematically shows the communication between a client and a server for adaptive streaming scalable video and/or audio according to the prior art.
Figures 1B schematically shows the communication between a client and a server for adaptive streaming scalable video and/or audio according to a first embodiment of the invention.
Figures 1C schematically shows the communication between a client and a server for adaptive streaming scalable video and/or audio according to a second embodiment of the invention.
Figure 2 shows a table of the enhancement layers pushed by a server according to the first embodiment (rows indicated with "1") and according to the second embodiment (rows indicated with "2")
Figure 3 schematically shows an HTTP adaptive streaming client implemented as a browser plugin in accordance with the second embodiment of the invention.
Figure 4 schematically shows an HTTP adaptive streaming client as a stand-alone application in accordance with the first embodiment of the invention.
Figure 5 shows a content distribution network delivery appliance in accordance with the first embodiment of the invention.
Figure 6 shows a flow diagram of a first embodiment of the method according to the invention.
Figure 7 shows a flow diagram of a second embodiment of the method according to the invention.
Figure 8 shows a flow diagram of a third embodiment of the method according to the invention.
Figure 9 shows a flow diagram of a fourth embodiment of the method according to the invention.

### Description of embodiments

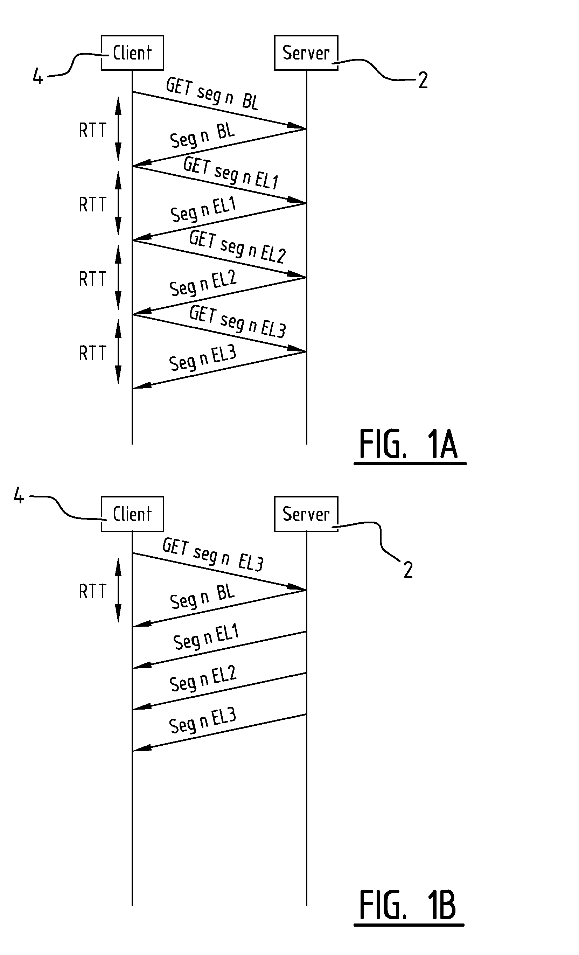

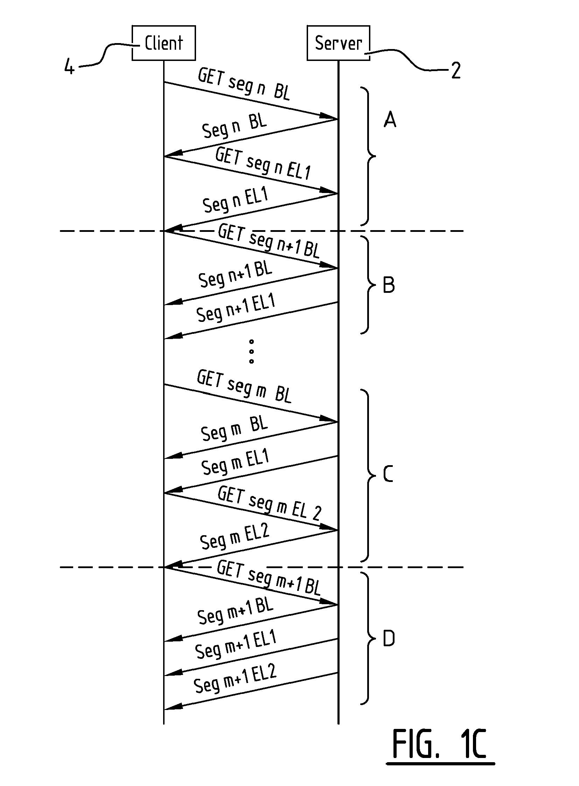

A HAS implementation (figure 1) comprises a server 2 and a client 4. In a conventional implementation (figure 1A), the client 2 first sends a request for the base layer of a given segment *n*, i.e. "GET seg n BL". In response to the request, the server 4 sends the base layer of segment *n* to the client, i.e. "Seg n BL". Subsequently, the client 4 sends a request for the first enhancement layer of segment *n*, "GET seg n EL1", to server 2. The server 2 responds by sending the requested enhancement layer, i.e. "Seg n EL1". The client 4 continues to send consecutive requests for each individual enhancement layer. In total, this process requires a Round Trip Time (RTT) for each layer, i.e. four RTTs in the example shown.

In a first embodiment of the invention (figure 1B), the server 2 receives a request from the client 4 for enhancement layer 3 (EL3), i.e. "GET segment n EL3". In other words, instead of sending a request for each individual layer, the client only sends a request for the layer having the highest quality. In response to said request, the server 2 pushes all layers up to the requested enhancement layer, i.e. all layers up to EL3 (BL, EL1 and EL2), and also returns the requested enhancement layer, i.e. EL3. Therefore, only one RTT is required to send all desired layers from the server 2 to the client 2.

It is noted that the order of sending the layers may be different from the one shown. For example, the server may be configured to push the layers in descending order of quality, e.g. EL3, EL2, EL1 and BL.

In a variant of the first embodiment, the server 2 receives a request from the client 4 for a base layer, wherein said request includes an indication of the highest quality level desired. For example, the server 2 receives a request "GET segment n BL", including an indication "EL3". In response, the server sends the base layer of segment n and pushes all layers up to and including EL3.

Alternatively, the server 2 receives a request from the client 4 for a base layer, wherein said request include an indication of one or more enhancement layers. For example, the server 2 receives a request "GET segment n BL", including the indications "EL1" and "EL2". In response, the server sends the base layer of segment n and pushes enhancement layers EL1 and EL2.

In a second embodiment (figure 1C) during an initialization stage A, the streaming is performed according to the process described above with respect to figure 1A, i.e. for each layer of a selected segment an individual request is sent from the client 4 to the server 2. In the example shown, the base layer BL and the first enhancement layer EL1 are requested consecutively for segment *n*. Preferably, stage A is performed on at least one segment before proceeding to a pushing stage B. For example, the initialization stage is used for the segment first requested by the client from the server.

In the second embodiment, the server 2 is configured to track the highest quality transferred to the client 4 in the initialization stage A. In the example shown, the highest quality transferred to the client is EL1. During the pushing stage B, the server 2 receives a request of the client for the base layer of the next segment, i.e. BL of segment *n* + *1*. In response, the server returns the requested layer and also pushes the enhancement layers up to and including the layer corresponding to the highest quality determined for the previous segment, i.e. segment *n*. In this case, said highest quality layer corresponds to EL1. Therefore, during stage B the server will push EL1 in addition to sending BL in response to a request for BL.

If the client 4 determines that a higher video quality may be obtained on the basis of e.g. the bandwidth and/or the buffer filling, the client may request further enhancement layers. This is illustrated as stage C, wherein the client requests the base layer of segment *m.* As no higher quality layers have been requested until this request, the server 2 will return the base layer and the first enhancement layer of segment *m.* The client then further requests the second enhancement layer, EL2, upon which the server will return EL2 of segment *m.* The server will preferably also update the tracked highest quality to EL2, such that for a subsequent request for the base layer (stage D), the server will return all layers up to EL2.

In a first implementation of the second embodiment, the initialization stage A is repeated after a predetermined number of segments. This enables the client 4 to request a lower quality, if necessary. The predetermined number may be fixed, configurable and/or negotiated between the client 4 and server 2. For example, stage A is performed after each series of 2-50 segments, e.g. every 10 segments. In this first implementation, the server may alternatively be configured to keep the highest quality level of the pushed layers constant between initialization stages A. For example, in the example shown, the server does not alter the highest quality level EL1 to EL2 when receiving a subsequent request for EL2 (stage C), but instead maintains EL1 as highest level until the next initialization stage A.

In a second implementation of the second embodiment, the server 2 may adapt the highest quality level to be pushed to the client 2 on the basis of the rate at which base layers are requested by the client 2. If the server 2 determines that the base layers are requested at a slower rate than would be the case for normal playback, the server may automatically decrease the highest tracked quality level. Iteratively, if the request rate for the base layers still remains too slow, the server could further decrease the highest tracked quality. The server may again increase the highest tracked quality if the client subsequently requests a higher quality layer.

In a third implementation of the second embodiment, the server 2 may determine a highest quality level to be pushed on the basis of information exposed by the network (operator), such as the current or expected bandwidth availability towards the client. For example, if the bandwidth decreases, the server may decrease the highest quality level to be pushed.

In a fourth implementation of the second embodiment, the server does not fall back to the initialization stage, but decreased the tracked highest quality level, e.g. by one. For example, if the highest tracked quality level is EL2, the server may reduce the tracked quality level after a predetermined number of segments to EL1, e.g. after 2-50 segments. The predetermined number may be fixed, configurable and/or negotiated between the client 4 and server 2. As is the case for the other implementations of the second embodiment, if the client 4 determines that a higher video quality may be obtained on the basis of e.g. the bandwidth and/or the buffer filling, the client may request further enhancement layers. Preferably, the server will change the tracked highest quality level accordingly.

In a fifth implementation of the second embodiment, the server decreases the tracked highest quality level to the base layer level after a predetermined number of segments.

A combination of the above implementations is also possible.

Instead of running initialization stage A for the first segment requested by the client, the server may use a predetermined highest quality level. Subsequently the highest quality level may be reduced if the rate of requesting base layers falls below a threshold.

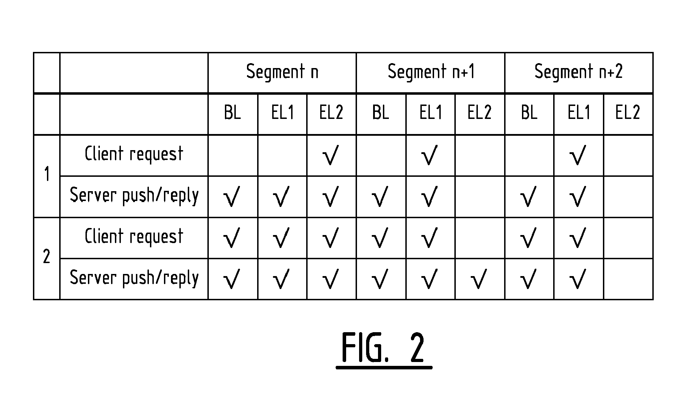

The first and second embodiment are further illustrated in the table of figure 2. In the first embodiment, the client 4 sends only the request for the highest quality layer. In the example shown, the client sends a request for EL2 of segment *n*. The server 2 responds by returning EL2 of segment *n* and also pushing BL of segment *n* and EL1 of segment *n*. Subsequently, the client 4 requests EL1 of segment *n*+*1.* The server 2 responds by sending EL1 of segment *n*+*1* and pushing BL of segment *n*+1. For segment *n*+*2*, the client 4 also requests EL1. Server 2 sends EL1 of segment *n*+*2* and pushes BL of segment *n*+*2* in response.

In the second embodiment, the client 4 sends subsequent requests for BL, EL1 and EL2 of segment *n*. This corresponds to initialization stage A. For the next segment *n* + 1, the server switches to pushing stage B. The client requests BL of segment *n* + *1*. On the basis of the requests for segment *n*, the server has tracked EL2 as the highest quality level. In response to the request for BL of segment *n*+*1,* the server sends BL of segment *n*+*1* and pushes EL1 and EL2. For each of EL1 and EL2 the server sends a push announcement message prior to pushing. For segment *n*+*1*, the client has switch to quality EL1. Therefore, in response to the push announcement message for EL2, the client sends a push decline message to the server. In response to the push decline message for EL2 the server cancels the pushing of EL2 and updates the tracked highest quality level to EL1. Therefore, when the client sends a request for BL of segment *n*+*2*, the server will responds by sending BL of segment *n*+*2* and push EL1.

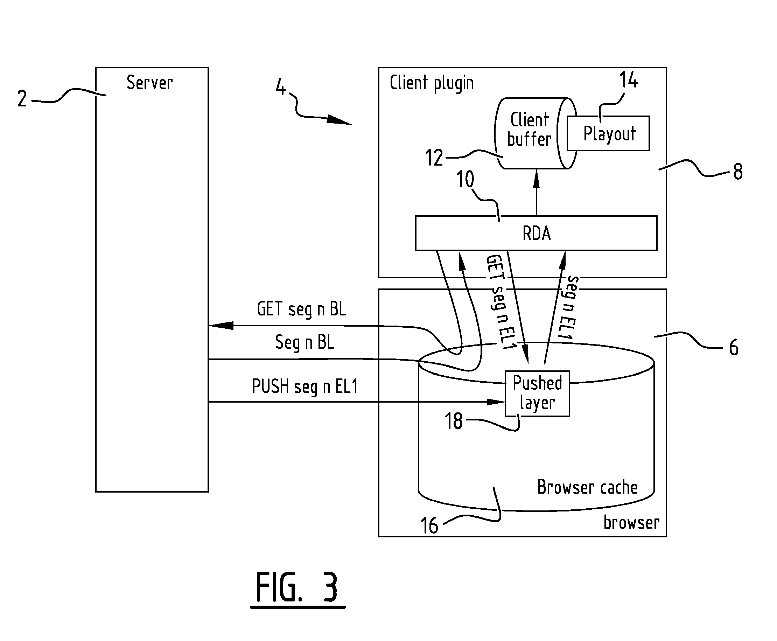

Figure 3 shows a server 2 and a client 4, wherein the client 4 comprises a browser 6 and a browser plugin 8 for HAS capabilities. The plugin 8 can only request layers / segments via a well-defined software interface towards the browser. In some implementations, no interface may exist for notifying the plugin 8 that an object was pushed by server 2 to the browser 6. The browser 6 will just add the object to the browser cache 16. When the plugin 8 later request the pushed object, the browser serves the requested object immediately from the local cache.

The plugin 8 comprises a rate determination algorithm (RDA) component 10 communicating with a client buffer 12. The client buffer is operatively connected to a playout component 14. The browser 6 comprises a browser cache 16. The client 4 requests a base layer of segment *n* from server 2 by sending a corresponding request via the RDA component 10 and browser 6 to server 2. Server 2 responds by sending the requested base layer to the browser 6 which delivers the layer to the RDA component 10. The server 2 has previously tracked the highest quality level of the layers requested by the client 4. On the basis of the tracked highest quality, the server also pushes a first enhancement layer of segment *n* to the browser cache 16 in response to the request for the base layer. The pushed layer 18 remains in browser cache such that it can be delivered to the plugin 8 when the RDA component 10 sends a request to the browser for layer EL1. As the pushed layer 18 is already in browser cache 16, the browser can immediately return layer EL1 to the RDA component 10.

In the embodiment shown, the browser 6 implementation does not allow an object to be pushed directly to the plugin 8 from the server 2. However, the invention is not limited to such implementations. The skilled person will appreciate that the limitations of the plug-in interfaces of browsers, such as the NPAPI interface, may not be present in all current and future browsers.

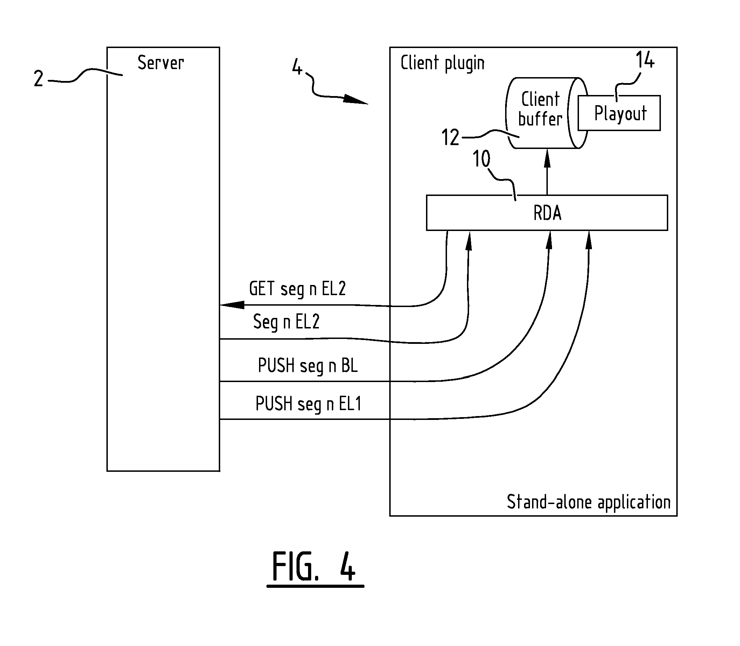

Figure 4 shows a server 2 and a client 4, wherein the client component comprises a Rate Determination Algorithm (RDA) component 10, operatively connected to a client buffer 12. The buffer 12 is connection to a playout component 14. The client 4 requests a layer EL2 of segment *n*, upon which the server 2 returns the requested layer and also pushes layer BL and layer EL1 of segment *n* to the client.

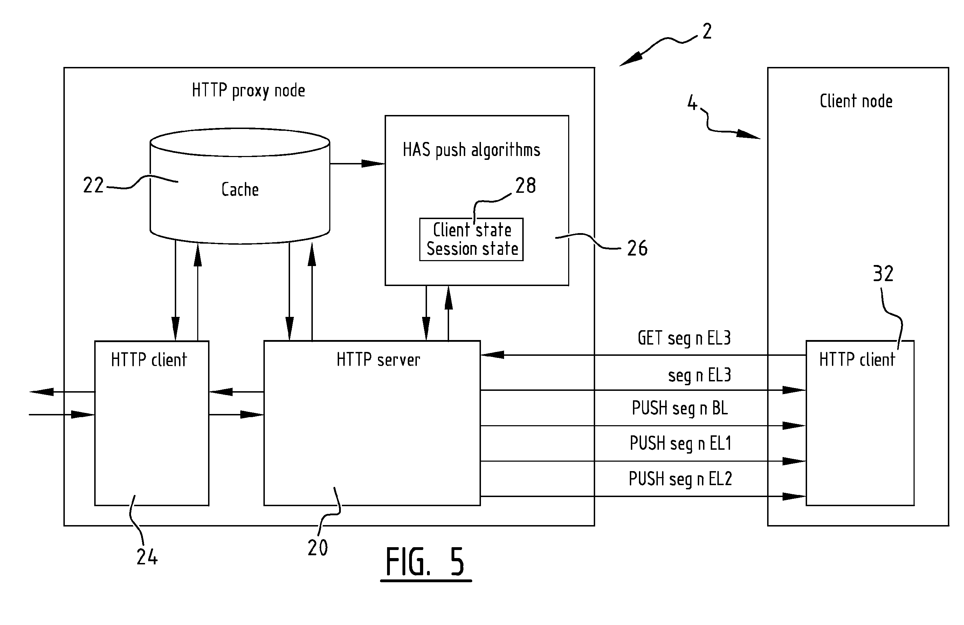

Figure 5 shows an embodiment of a content distribution network (CDN) delivery appliance 2. The CDN delivery appliance 2 comprises a HTTP server 20 which is in communication with a cache 22. HTTP server 20 is also in communication with a HTTP client 24. The HTTP client 24 communicates with cache 22. The HTTP server 20 is also in communication with a HAS push algorithm (HPA) component 26 which comprises a memory component 28 for storing the client state and/or session state. The HPA component 26 is further in communication with the cache 22. The client node 4 comprises an HTTP client 32. The HTTP server component 20 takes care of the HTTP communication with the client 4. The HTTP server 20 receives get requests from the client.

The HTTP server 20 performs a check to verify if the requested layer / segment is already present in the cache 22. If present, it will provide the requested layer / segment to the client 4. If not present, it will inform the CDN internal communication client to fetch the layer / segment from an upstream CDN node. In case the layer / segment was not found in cache 22, the HTTP client 24 fetches the layer / segment from an upstream CDN node. When the HTTP client 24 obtains the requested layer / segment completely or partially, it informs the HTTP server 20. The HTTP server will then take care of the transfer to the client 4 via HTTP client 32.

Each time when an HTTP request or a response is received by the HTTP server, the HPA component 26 will be informed. HPA component 26 will disregard all requests/responses that are not HAS related. It will then use one or more algorithms to decide if and what additional layers / segments must be pushed to the requesting client 4. It instructs the HTTP server 20 to deliver the additional objects via server push. Finally, the HTTP server 20 will push the objects to the client 4.

The server 4 may track a client state or a session state, tracking the highest quality, e.g. bitrate, previously send to individual clients 4.

As shown in the example, when the client 4 requests EL3 of segment n, the HPA component 26 determines that in addition to sending layer EL3 of segment *n*, the layers BL, EL1 and EL2 of segment *n* are to be pushed to the client 4.

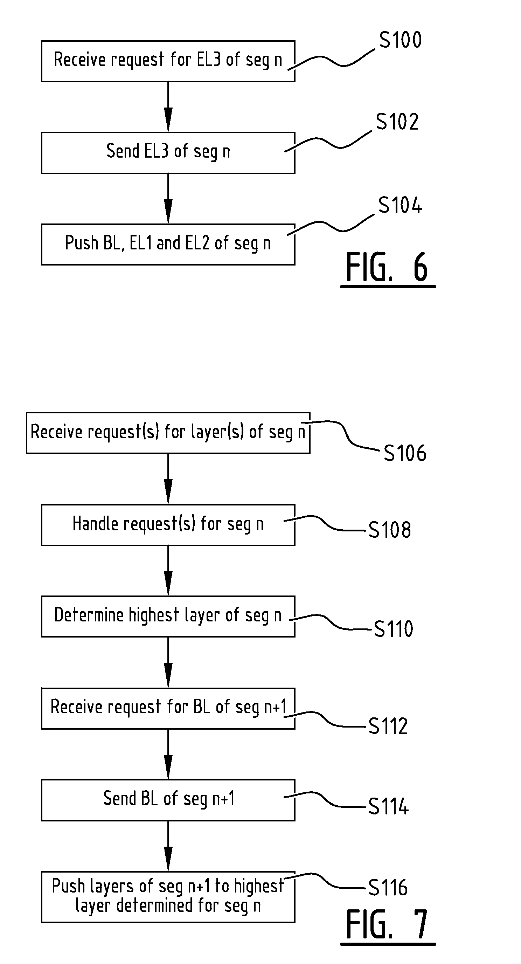

Figure 6 illustrates a first embodiment of a method of the invention. In step S100 a request for EL3 of segment *n* is received by a server. In response to the request, EL3 of segment *n* is sent from the server to the client in step S102. In addition, the base layer BL, first enhancement layer EL1 and the second enhancement layer EL2 of segment *n* are pushed from the server to the client in step S104. It is noted that the order of steps S102 and S104 may be reversed and the segments of step S104 may be pushed in any desired order.

Figure 7 illustrates a second embodiment of a method of the invention. In step S106 a request for one or more layers of segment *n* is received by a server from a client. In step S108, the request for said one or more layers of segment *n* is handled by the server. Subsequently, the server determines in step S110 which of the layers is the highest quality layer. When a subsequent request is received for a base layer of a next segment, segment n + 1, in step S112, the server responds by sending the base layer of segment n + 1 in step S114 and pushing any further layers up to the highest layer as determined for segment n in step S116. Again the order of steps S114 and S116 may be reversed, and the further layers may be pushed in any order.

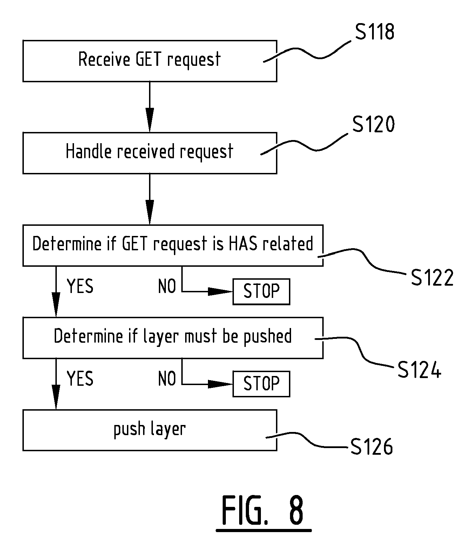

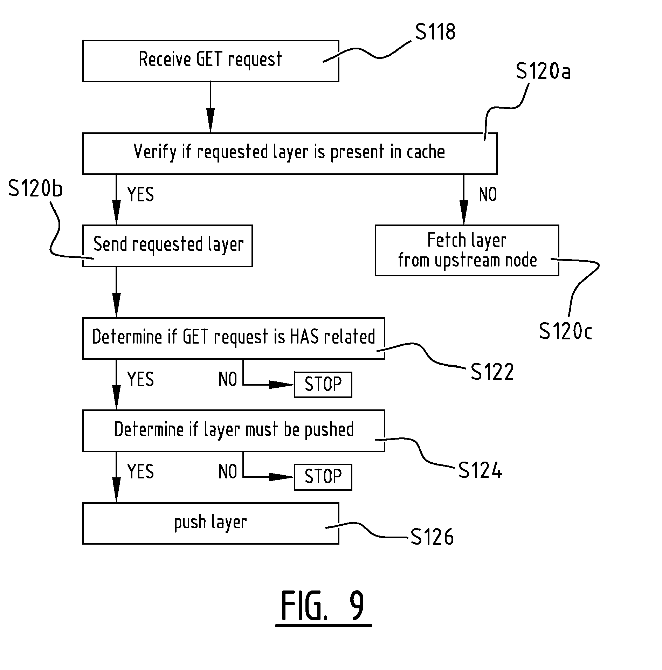

Figure 8 illustrates a third embodiment of a method of the invention. In step S 118 a GET request for a layer of a segment is received. In step S120, the received request is handled, i.e. the requested layer / segment is sent to the client. In step S122 it is determined whether the GET request is HAS related. If so, it is determined whether further layers must be pushed in step S124. If so, said layers are pushed in step S126. Handling of the request, step S120, is further illustrated in figure 9. First it is determined if the requested layer / segment is present in cache in step S120a. If so, the requested layer / segment is sent in step S120b. If not, the requested layer / segment is fetched from an upstream node in step S120c.

A person skilled in the art would readily recognize that steps of various above-described methods can be performed by programmed computers and/or electronic devices with computation capabilities. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers and/or electronic devices with computation capabilities (where hard coded or soft coded) programmed to perform said steps of the above-described methods. The functions of the various elements shown in the figures, including any functional blocks may be provided through the use of dedicated hardware as well as hardware capable of executing software in association with appropriate software. Hardware and may include, without limitation, digital signal processor (DSP) hardware, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic.

It should be appreciated by those skilled in the art that any block diagrams herein represent conceptual views of illustrative circuitry embodying the principles of the invention. Similarly, it will be appreciated that any flow charts, flow diagrams, represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Server for adaptive streaming of scalable video and/or audio to a client, wherein the scalable video and/or audio is divided into consecutive segments, each segment being encoded as a base layer and at least one enhancement layer, the server comprising:
- a receiver configured to receive a request from the client for a first layer of a selected segment, the first layer being one of the base layer and the at least one enhancement layer; and
- a transmitter configured to, in response to the request:
∘ send the requested first layer of the selected segment to the client; and
∘ push at least one second layer of the selected segment to the client, the second layer being a different one of the base layer and the at least one enhancement layer.

2. Server according to claim 1, wherein the first layer is one of the at least one enhancement layers and the transmitter is configured to push all layers of the selected segment having a lower quality level than the requested first layer.

3. Server according to claim 1, wherein the receiver is configured to receive a request from the client for a base layer of a selected segment, said request including an indication of at least one enhancement layer of the selected segment, wherein the transmitter is configured to, in response to the request, send the requested base layer of the selected segment to the client and push the at least one enhancement layer indicated in the request.

4. Server according to claim 1, wherein the transmitter is configured to send a push announcement message to the client for each layer of the at least one second layer before pushing the respective layer, wherein the receiver is further suitable for receiving a push decline message from the client, and the transmitter is further configured to cancel the pushing of a layer if a push decline message for said layer is received by the receiver.

5. Server according to claim 4, wherein the transmitter is configured to, in response to a push decline message from the client for a layer of the selected segment having a first quality, cancel the pushing of all layers of the selected segment having a quality equal to or greater than the first quality.

6. Server according to claim 1, 4, or 5, further comprising a tracker configured to track the highest quality level of the one or more layers transferred to the client, wherein the first layer is the base layer and the transmitter is configured to push to the client any further layers of the selected segment up to and including the layer corresponding to the highest quality level of a segment preceding the selected segment in response to the request for the base layer of the selected segment.

7. Server according to claim 6, wherein the server is configured to switch between
- an initialization mode, wherein the transmitter is configured to, in response to a request for a layer of a segment, only send said requested layer to the client and the tracker is configured to track the highest quality level of the layers transferred to the client; and
- a pushing mode, wherein the transmitter is configured to push to the client any further layers up to and including the layer corresponding to the tracked highest quality level in response to a request for the base layer of the selected segment.

8. Server according to any preceding claim, the server being configured to communicate with the client according to a web protocol supporting server push, wherein the web protocol preferably is an HTTP protocol or SPDY protocol, preferably HTTP 2.0 or later.

9. Method for adaptive streaming of scalable video and/or audio from a server to a client, wherein the scalable video and/or audio is divided into consecutive segments, each segment being encoded as a base layer and at least one enhancement layer, the method comprising the steps of:
- receiving with the server a request from the client for a first layer of a selected segment, the first layer being one of the base layer and the at least one enhancement layer;
- sending the requested first layer of the selected segment from the server to the client in response to the request; and
- pushing at least one second layer of the selected segment from the server to the client in response to the request for the first layer of the selected segment, the second layer being a different one of the base layer and the at least one enhancement layer.

10. Method according to claim 9, wherein the first layer is one of the at least one enhancement layers and pushing the at least one second layer comprises pushing all layers of the selected segment having a lower quality level than the requested first layer.

11. Client for receiving an adaptive stream of scalable video and/or audio from a server, wherein the scalable video and/or audio is divided into consecutive segments, each segment being encoded as a base layer and at least one enhancement layer, the client comprising:
- a rate determination component configured to determine the highest quality level layer to be obtained for a selected segment;
- a transmitter configured to send a request to the server for the layer of the selected segment corresponding to the determined highest quality level layer; and
- a receiver configured to receive from the server all layers of the selected segment up to and including the determined highest quality level layer in response to the request.

12. Method for receiving an adaptive stream of scalable video and/or audio from a server by a client, wherein the scalable video and/or audio is divided into consecutive segments, each segment being encoded as a base layer and at least one enhancement layer, the method comprising:
- determining the highest quality level layer to be obtained for a selected segment;
- sending a request from the client to the server for the layer of the selected segment corresponding to the determined highest quality level layer; and
- receiving with the client from the server all layers of the selected segment up to and including the determined highest quality level layer in response to the request.

13. Client for receiving an adaptive stream of scalable video and/or audio from a server, wherein the scalable video and/or audio is divided into consecutive segments, each segment being encoded as a base layer and at least one enhancement layer, the client comprising:
- a rate determination component configured to determine the highest quality level layer to be obtained for a selected segment;
- a transmitter configured to send a request to the server for a layer of the selected segment; and
- a receiver configured to receive from the server layers of the selected segment in response to the request, the receiver further being configured for receiving push announcement messages from the server, a push announcement message indicating a layer of the selected segment to be pushed from the server to the client,
wherein the transmitter is configured to send a push decline message to the server in response to a push announcement message for a layer if said layer has a quality level exceeding the highest quality level determined by the rate determination component.

14. Method for receiving with a client an adaptive stream of scalable video and/or audio from a server, wherein the scalable video and/or audio is divided into consecutive segments, each segment being encoded as a base layer and at least one enhancement layer, the method comprising:
- determining the highest quality level layer to be obtained for a selected segment;
- sending a request to the server for a layer of the selected segment;
- receiving from the server layers of the selected segment in response to the request; and
- upon receipt of a push announcement message indicating a layer of the selected segment to be pushed from the server to the client, sending a push decline message to the server if said layer has a quality level exceeding the highest quality level determined by the rate determination component.

15. A computer program product comprising non-transitory computer-executable instructions configured to, when executed, perform the steps of the method of any of the claims 9, 10, 12 or 14.
